# EUROPEAN PATENT APPLICATION

(11) **EP 3 382 433 A1**
(43) Date of publication of application: **03.10.2018**
(21) Application number: 17305357.0
(22) Date of filing: 28.03.2017
(51) Int. Cl.: G02B 6/42

(54) **FULL WAFER INTEGRATION OF III-V DEVICES**

(71) Applicant: Nokia Solutions and Networks Oy, 02610 Espoo (FI)
(72) Inventor: DUAN, Guang-Hua, 91767 PALAISEAU (FR); POMMEREAU, Frédéric, 91767 PALAISEAU (FR); BRENOT, Romain, 91767 PALAISEAU (FR); LE LIEPVRE, Alban, 92500 RUEIL-MALMAISON (FR)
(74) Representative: Novagraaf Technologies

(57) **Abstract**

The present invention relates to a full wafer integration process for integrating III-V devices and associated product by process devices. The full wafer integration process for integrating III-V devices comprising:
- providing a planarized substrate wafer (10) comprising devices including patterned waveguide (2);
- providing an III-V wafer (20) comprising III-V active structures (22);
- MESA etching the III-V wafer to form at least a MESA top (S104) and depositing a metal layer (4) on the MESA top; and in parallel
- etching the substrate to form at least a trench (S102), and covering the trenches formed with a metal layer (4),
the trenches of the substrate wafer (10) and the MESA top of the III-V substrate wafer (20) being adapted to fit together, then
- fitting the photonic substrate wafer (10) and the III-V wafer (20) together and bonding both wafers by melting the metal layer (4) of the trenches and the metal layer (4) of the MESA top together (S106).

## Description

### SPECIFICATION

### Field of the Invention

The present invention relates to a full wafer integration process for integrating III-V devices and associated devices manufactured by such process.

### Background

Silicon photonic is a photonic integration platform. However, the integration of many light sources in silicon is still a challenging problem. To completely take the benefits from the silicon photonic mass processing capability, a collective, full wafer process is required for the integration of laser sources. Additionally, different optimized III-V structures are required in order to realize high performance lasers, modulators or photodiodes. For instance, the optimized III-V structures of a modulator and of a laser are different. Moreover, to obtain good thermal cooling thus a large output power, a semiconductor buried laser is desired.

In order to overcome these problems a wafer bonding on silicon technique has been developed for hybrid lasers by III-V Lab.

In this process, a silicon (Si) wafer is first processed (waveguides, modulators, photodiodes). The Si wafer is then planarized. Then an epitaxied InP wafer is bonded to the Si wafer. The InP substrate is removed, leaving only the III-V active structure bonded on the Si. The last step is the III-V processing.

This process is fully collective, with the active III-V material on top of the silicon. Only one InP wafer can be bonded to the Silicon wafer. Regrowth has not been demonstrated on bonded wafer because of the hight temperature required (>600°C). Therefore, only shallow ridge and deep ridge lasers, which have lower thermal performances, can be realized.

Additionnally, the Silicon On Insulate (SOI) buried oxide structure further degrades the thermal behavior of the laser. Also, the perfect coupling of the optical mode from the III-V waveguides to the silicon waveguide is difficult to achieve.

Other types of integrated III-V devices have been made using the following approach:
- Germanium lasers directly epitaxied on Si;
- Direct III-V epitaxy on Si;
- Flip-chip on a submount. On a submount, a silicon chip and a III-V chip are assembled. The performances are excellent, but it is not a collective process.
- Flip-chip of the III-V chip/dies on the silicon wafer. This technique consists in bonding III-V dies onto the etched trenches of silicon wafers. III-V dies are then processed with waveguides lithographically allied to the silicon waveguides.

### Summary

The present invention proposes a full wafer integration process for integrating III-V devices to address the needs of easy to manufacture and mass processing photonic devices with high and full performance.

In a first embodiment, the full wafer integration process for integrating III-V devices comprises:
- providing a planarized substrate wafer comprising devices including patterned waveguides;
- providing an III-V wafer comprising III-V active structures;
- MESA etching the III-V wafer to form at least a MESA top and depositing a metal layer on the MESA top; and in parallel
- etching the substrate wafer to form at least a trench, and covering the trench formed with a metal layer,
- the trench of the substrate wafer and the MESA top of the III-V wafer being adapted to fit together, then
- fitting the photonic substrate wafer and the III-V wafer together and bonding both wafers by melting the metal layer of the trenches and the metal layer of the MESA top together.

Advantageously, the metal used for the metal layers has a melting temperature lower than the temperature at which the physical properties of the III-V structures or of the structures of the substrate wafer, such as the waveguide, begin to deteriorate.

Advantageously, the full wafer integration process further comprises:
- removing the substrate of the III-V wafer; and
- finalizing the electrical contact of the integrated III-V device by depositing a metal layer onto the uncover III-V active structures.

This embodiment may comprises a second III-V structure bonding with a second III-V wafer after removing the substrate of the first III-V wafer.

The present invention further relates to devices manufactured according to the process described above.

In a first embodiment, a Photonic Integrated Circuit (PIC) is manufactured according to the process described above.

In a second embodiment a photonic hybrid laser manufactured according to the process described above, comprises:
- two ring resonator filters and loop reflectors, linked to
- a laser active section, linked to
- a Semiconductor Optical Amplifier (SOA) section,
the ring resonator filters, the loop reflectors and the waveguides which linked each element together being previously etched on a photonic substrate wafer, and the laser and SOA sections being previously formed into III-V structures on at least one III-V wafer.

In a third embodiment an Electro-absorption Modulated Laser (EML) manufactured according to the processes described above, comprises:
- two ring resonator filters and loop reflectors, linked to
- a laser active section, linked to
- an Electro-Absorption Modulation (EAM) section, linked to
- a Semiconductor Optical Amplifier (SOA) section,
the ring resonator filters, the loop reflectors and the waveguides which linked each element together being previously etched on a photonic substrate wafer, and the laser, the EAM and the SOA sections being previously formed into III-V structures on at least one III-V wafer.

In a fourth embodiment a Wavelength Division Multiplexing (WDM) Electro-absorption Modulated Laser (EML) manufactured according to the process described above, comprises:
- Distributed Feed-Back (DFB) Lasers, each one linked to an Electro-Absorption Modulation (EAM) section, and all laser signals entering into
- a wavelength MUltipleXer (MUX), linked to
- a Semiconductor Optical Amplifier (SOA) section,
the MUX and the waveguides which linked each element together being previously etched on a photonic substrate wafer, and the DFB lasers, the EAM and the SOA sections being previously formed into III-V structures on at least one III-V wafer.

In a fifth embodiment, a coherent dual polarization transmitter manufactured according to the process described above, comprises:
- two ring resonator filters and loop reflectors, linked to
- a laser active section whose optical output signal is divided into two similar optical signals called Continuous Wawe (CW) tunable lasers, each CW tunable laser being linked to
- a static power splitter dividing the laser signal into four laser signals, each one linked to
- an Electro-Absorption Modulation (EAM) section, linked to
- a static power combiner which recombined the four laser signals realising a Quadrature Amplitude Modulation, the output of the static power combiner being linked to
- a Semiconductor Optical Amplifier (SOA) section,
the ring resonator filters, the loop reflectors, the power splitter, the power combiner, and the waveguides which linked each element together being previously etched on one photonic substrate wafer, and the laser, the EAM and the SOA sections being previously formed into III-Vstructures on at least one III-V wafer, and
each CW tunable laser operating in TE and one of the two polarization being rotated after the active components to obtain two polarizations.

In a sixth embodiment, an ultra-broadband integrated source manufactured according to the process described above, comprises:
- ring resonators filters and loop reflectors, linked to
- different laser structures for different wavelength ranges and set in parallel, all laser signals entering into
- a wavelength MUltipleXer (MUX),
the ring resonators filters and loop reflectors, the MUX and the waveguides which linked each element together being previously etched on a photonic substrate wafer, and the different laser structures for different wavelength ranges being previously formed into III-V structures on III-V wafers.

### Brief Description of the Drawings

Some embodiments of devices in accordance with embodiments of the present invention are now described, by way of example only, and with reference to the accompagnying drawings, in which :
- The Figures 1 a and 1 b schematically illustrates a first step of the full wafer integration process proposed in a first and second embodiments of invention;
- The Figures 2a and 2b schematically illustrates a second step of the first and second embodiments;
- The Figures 3a and 3b schematically illustrates a third step of the first and second embodiments;
- The Figures 4a and 4b schematically illustrates a fourth step of the second embodiment;
- The Figures 5a and 5b schematically illustrates a optional step of the first and second embodiments;
- The Figure 6 schematically illustrates a fifth step of the second embodiment;
- The Figure 7 schematically illustrates a top view of a possible electrical contact scheme ;
- The Figure 8 schematically illustrates a flowchart of the second embodiment;
- The Figure 9 schematically illustrates the three main steps of the first embodiment;
- The Figures 10a and 10b schematically illustrates an Electro-absorption Modulated Laser (EML) design compatible with the process described in the first and second embodiments;
- The Figures 11 a and 11 b schematically illustrates a Wavelength Division Multiplexing (WDM) Electro-absorption Modulated Laser (EML) design compatible with the process described in the first and second embodiments;
- The Figures 12a and 12b schematically illustrates a coherent dual polarization transmitter design compatible with the process described in the first and second embodiments; and
- The Figure 13 schematically illustrates an ultra-broadband integrated source design compatible with the process described in the first and second embodiments.

### Description of Embodiments

The following description will be focused on III-V devices for photonic uses and Photonic Integrated Circuits (PICs) but can be easily generalized. In the same way, the examples described use a silicon substrate wafer but another type of substrate wafer can be used.

### Process embodiments:

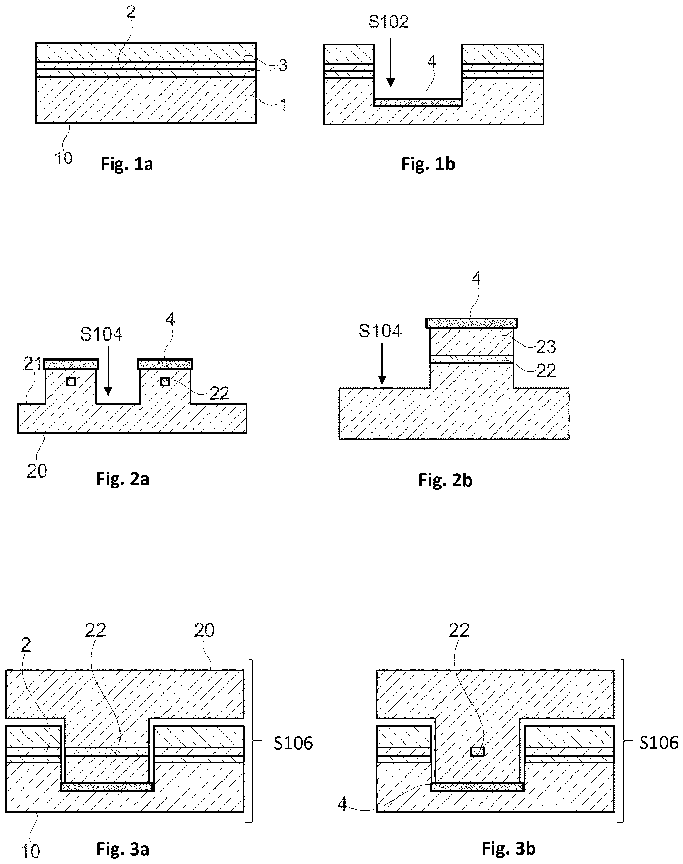

In a first embodiment of the invention, a full wafer integration process comprises three main steps described in **figures 1-3**.

**Figures 1a and 1b** describe a first step of the first embodiment.

**Figure 1a** represents a planarized silicon substrate wafer 10 on which a patterned waveguide 2 has been made. This operation can be made by successively etching and despositing silicon dioxide layers and by a chemical-mechanical polishing process. On **Figure 1a**, one can see:
- a first oxide layer 3 on the entire surface of the silicone substrate 1 of the silicon substrate wafer 10; then
- a silicon layer forming the waveguide 2; and finally
- a last oxide layer 3 to cover and planerized the surface of the silicon wafer 10.
Ion implantation can also be made on some waveguides in order to create for instance pn junctions.

This planerized silicon substrate wafer 10 is then etched S102 with at least one trench. The trench or trenchs formed are then covered with a metal layer 4, as shown in **Figure 1b**.

**Figures 1a and 1b** are sectional view perpendicular to the planarized top surface.

**Figures 2a and 2b** represent a second step of the process which can be done successively or in parallel to this first step.

A III-V wafer 20 comprising III-V active structures 22 is processed. In the same manner as above, this III-V wafer 20 can be made by growing successively layers on a wafer, for exemple an InP substrate 21: one layer with an InP active layer, one with the III-V structure 22 and one InP active layer 23 covering the III-V structure and planirizing the III-V wafer 20.

Then, the III-V wafer 20 is MESA etched S104 forming at least one MESA top comprising a III-V structure 22 (for example a Semiconductor Optical Amplifier, SOA, section). The MESA top or tops formed are then covered with a metal layer 4 of a similar metal (i.e. a metal having a low and similar melting temperature) as for the covering of the trenches made in the silicon substrate wafer 10. Sectional views of the processed III-V wafer are illustrated in **Figures 2a and 2b**.

After realizing these two steps S102, S104, the third step of the first embodiment, described in **Figures 3a and 3b**, is to assemble both wafers 10 and 20, and to bond them by melting the metal layer 4 of the trenches and the metal layer 4 of the MESA tops together, S106.

To perform this step S106, it is crucial that the trenches' size fit perfectly with the MESA tops, so the etching of the silicon substrate wafer 10 and the MESA etching of the III-V wafer 20 must be adapted to each other.

To ensure good optical transmission between the waveguide 2 and the III-V structure 22, the mechanical alignment must be precise. For example, if the optical mode used is large (ex: a 4 µm width) like when using optical tapers, the requirements are in the range of 1µm.

Flip-chip machines can perform alignment with accuracies better than 1µm. Additionally, self alignment could be implemented during the bonding reflow thanks to the surface tension of the metal bonding.

An advantage of the flip-chip passive alignment plateform is to well master optical reflection. Optical reflections at the interface of the III-V structure 22 and the waveguide 2 of the silicon substrate wafer 10 can disturb the operation of the III-V device obtained by this process, so they must be minimized which is possible with de-confined optical modes and tilted waveguides with respect to the normal direction of the interface for example.

Due to the large number of devices, an active alignment may be considered without impairing the cost: before the soldering of the metal layers, the photo-current of a photodiode in the silicon could be optimized for example, requiring that it be coupled to a light emitting device in the III-V structure 22.

Typically, the transmission loss is less than 0.5 dB between the two waveguides.

Preferably, the metal is choosed so that its melting temperature is low enough in order to not damage the physical properties of the III-V structures 22 and of the waveguide 2, for example indium, tin.

To realise the bonding, the wafers 10 and 20 after being put together and perfectly aligned are put in a chamber heated to the melting temperature of the metal selected.

In a second embodiment, the process comprising the three main steps of the process also comprises two other steps to finalize the III-V device created by the previous steps.

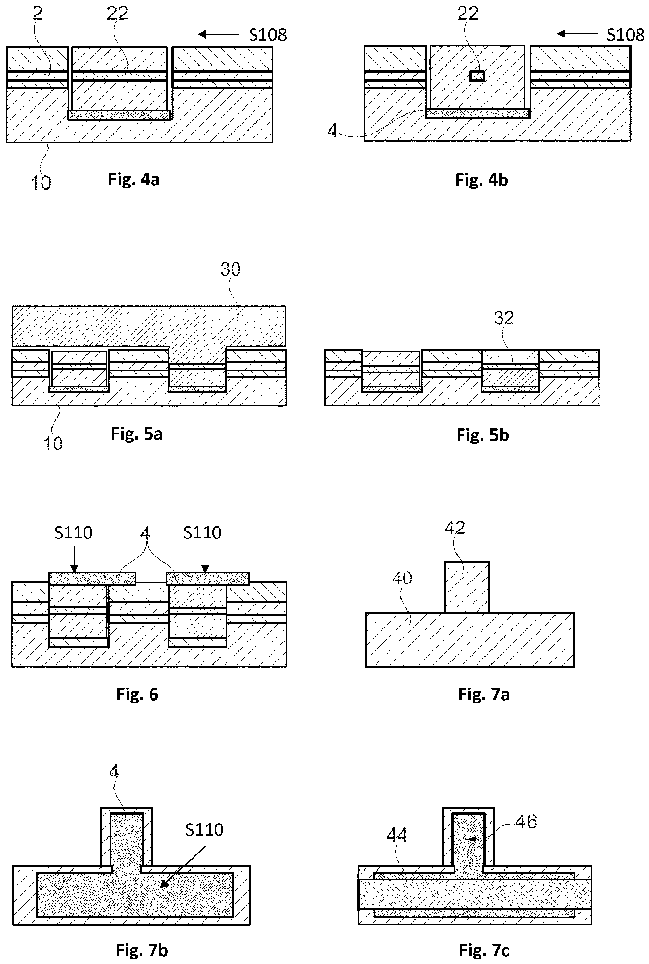

The next or fourth step is to remove the substrate of the III-V wafer 20, S108, leaving only the III-V active structure bonded on the silicon substrate wafer 10 as shown in **Figure 4a and 4b**, **Figure 4a** being a sectional view parallel to the waveguide 22, and **Figure 4b** being a sectional view perpendicular to the waveguide 22.

After this removing step S108, it is possible to integrate another III-V structure 32 into a second trench made in the silicon substrate wafer 10 by repeating steps S102, S104 and S106 with a second III-V wafer 30 previously processed as **Figures 5a and 5b** show. This step is optional and can be repeated as many times as wished depending on the number of III-V structures to integrate.

Then, the final step, or fifth step of the second embodiment, consists in depositing a metal layer 4 onto the uncover III-V active structure, S110, to form a top electrical contact for electrical injection as shown in **Figure 6**. The metal does not have to be the same as the one for the metal bonding.

**Figures 7a, 7b and 7c** show a possible bottom electrical contacting schematics. **Figure 7a** shows a top view of the substrate wafer 10. The trench 40 is made in the silicon substrate wafer 10, and part 42 is the initially planarized part of the wafer. Both 40 and 42 are covered by the metal layer 4 deposited in the first step of the process (see **Figure 7b**). However, the part 42 is not covered by the MESA top 44 when both wafers are put together and bonded (S106), defining an easy accessible bottom electrical contact 46 when the substrate of the III-V structure is removed (S108).

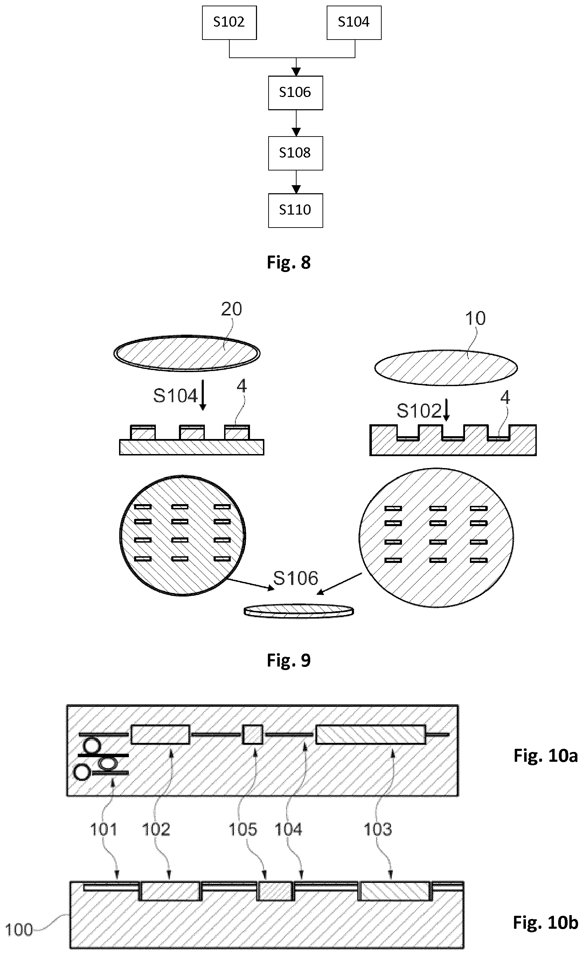

The global process of the second embodiment, summarized in the synoptic of **Figure 8**, enables to realise a full wafer integration for manufacturing III-V devices.

The three main steps of the first and second embodiment are represented in **Figure 9**, where a full III-V processed wafer 20 can be bonded S106 to a full processed silicon wafer 10 after being respectively MESA etched (S104) and trench etched (S102) to fit perfectly together.

### Device embodiments

The present invention also relates to III-V devices.

In a first general embodiment, a Photonic Integrated Circuit (PIC) is made according to the process previously described. This device can comprise a variety of integrated optics such as waveguides, couplers, filters (example for multiplexers or demultiplexers in Wavelength Division Multiplexing, WDM, systems), power splitters, power combiners or active elements with optical gain.These elements are previously implemented in a III-V wafer or on a planarized silicon substrate wafer depending of their complexity.

For example, in a first specific embodiment, it is possible to manufacture a silicon photonic hybrid laser comprising :
- two ring resonator filters and loop reflectors 101, linked to
- a laser active section 102, linked to
- a Semiconductor Optical Amplifier (SOA) section 103.

For this, the silicon substrate wafer is previously processed by fabricating on it the ring resonator filters and the loop reflectors 101, and the waveguides 104 which will link each elements together; and the III-V wafer contains the laser active section 102 and the SOA section 103, or there may be one III-V wafer comprising the laser active section 102 and another one comprising the SOA section 103. The design of each wafer is made in such a way that all elements fit together and be well aligned.

In a second specific embodiment as shown in **Figures 10a and 10b**, an Electro-Absorption Modulated (EAM) section 105 can be added between the laser active section 102 and the SOA section 103 to form an Electro-absorption Modulated Laser (EML) device 100. **Figure 10a** represents a top view of the EML device 100, and **Figure 10b** represents a sectional view parallel to the waveguides 104.

In a third specific embodiment, a Wavelength Division Multiplexing (WDM) Electro-absorption Modulated Laser 120 is manufactured according to the process previously described.

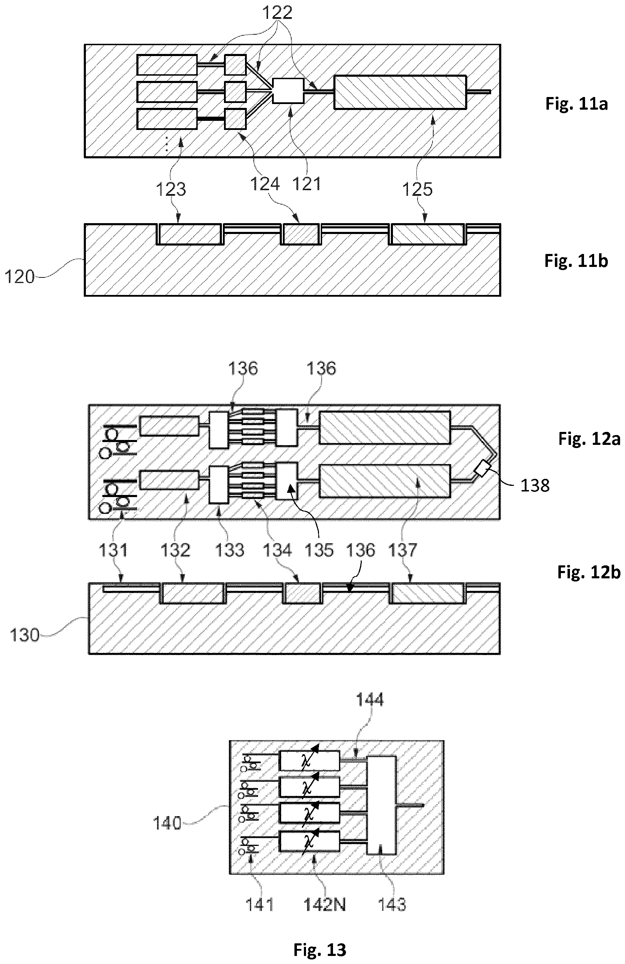

For this embodiment, the silicon substrate wafer is previously processed by fabricating on it a silicon multiplexer (MUX) 121 and multiple waveguides 122 linked to the MUX inputs, plus one exiting the MUX and others adapted to linked together the III-V elements integrated on a III-V wafers. The III-V wafer contains multiple Distributed Feed-Back (DFB) lasers 123, set in parallel and followed by EAM sections 124 adapted to modulate the signals emitted by the DFB lasers 123 before entery into the MUX 121, and one SOA section 125 adapted to amplify the output signal of the MUX 121. **Figure 11a** represents a top view of the WDM laser 120 layout, and **Figure 11b** represents a sectional view parallel to the waveguides 122.

Alternatively, the III-V elements can come from multiple wafers. In this case, the steps 102, 104 and 106 will have to be done as many times as required to integrate every III-V elements on the silicon substrate wafer.

Related to **figures 12a and 12b**, a fourth specific embodiment, which is a coherent dual polarization transmitter 130, is manufactured comprising:
- two ring resonator filters and loop reflectors 131, linked to
- a laser active section 132 whose optical output signal is divided into two similar optical signals called Continuous Wawe (CW) tunable lasers, each CW tunable laser being linked to
- a static silicon power splitter 133 dividing the laser signal into four laser signals, each one liked to
- an Electro-Absorption Modulation (EAM) section 134, linked to
- a static silicon power combiner 135 which recombined the four laser signals realising a Quadrature Amplitude Modulation (QAM), the output of the static silicon power combiner 135 being linked to
- a Semiconductor Optical Amplifier (SOA) section 137.

In this embodiment, the ring resonator filters and loop reflectors, the silicon power splitter 133, the silicon power combiner 135 and waveguides 136 adapted to ensure the connection between each electro-optical element are previously integrated into the silicon substrate wafer, and the rest of the elements into III-V structures on one or more III-V wafers.

Each CW tunable lasers is connected to EAMs with static phase controls (not represented) in silicon. After the QAM modulation, the signal is amplified by an SOA. Each CW tunable laser operates in Transverse-Electric (TE), but one of the two the polarization is rotated, by a polarization rotator 138, after the active components to obtain the two polarizations (TE and Transverse-Magnetic TM) inside the output fiber of the transmitter 130.

**Figure 12a** represents a top view of the coherent dual polarization transmitter 130 layout, and **Figure 12b** represents a sectional view parallel to the waveguides 136.

In a fifth specific embodiment represented in **Figure 13**, an ultra-broadband integrated source 140 is manufactured with the previously described full integrated wafer process. It comprises series of ring resonator filters and loop reflectors 141 linked to laser active sections 142N having different wavelength ranges and set in parallel, all laser signals entering into a wavelength MUltipleXer (MUX) 143. The laser active sections 142N having different wavelength ranges are previously processed in one or more III-V wafers and the rest of the elements comprising the waveguides required to linked together all the elements are previously generated on a silicon substrate wafer.

Each active section has an optical gain bandwidth in the order of 50nm. With four different laser active sections 142N, a total of tuning range 200nm can be obtained. With four gain active sections, comprised in the laser active sections 142N, with a gain bandwidth of 100nm, it is possible to achieve a tuning range covering 1250nm to 1650 nm on a single integrated laser.

The invention has many advantages. The process offers better thermal cooling properties and the possibility to integrate different epitaxial materials and separately processed components, allowing more complete integrated devices to be realized.

Compared to current flip-chip methods, this solution is a collective process which reduces the expected unitary fabrication costs.

This full wafer collective bonding technique can be distinguished from individual techniques. Components made with individual bonding processes display local alignment marks or local mechanical stops that appear on each individual structure, whereas in full wafer collective bonding, the alignment marks or mechanical stops are not repeated on each individual structure and will not appear in each component.

Furthermore III-V regrowth is not compatible with metal bonding due to temperature issues. The proposed method can be distinguished from the "Flip-chip of the III-V chip/dies" method by the fact that the III-V waveguide is buried.

The proposed method can be distinguished from wafer bonding technique by the fact that the III-V waveguide is bonded inside trenches and that possibly several different III-V structures are used on the same components.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

### REFERENCES NUMERALS

1 Silicone substrate
2 Waveguide
3 Oxide layer
4 Metal layer
10 Silicone substrate wafer
20 III-V wafer
21 InP substrate of the III-V structure
22 III-V structure
23 InP active layer
30 Second III-V wafer
32 III-V structure
40 Trench
42 Outgrowth
44 MESA top
46 Electrical contact
100 An Electro-absorption Modulated Laser (EML) according to an embodiment of the present invention
101 Loop reflector
102 Laser active section
103 Semiconductor Optical Amplifier (SOA) section
104 Waveguides
105 Electro-Absorption Modulated (EAM) section
120 Wavelength Division Multiplexing (WDM) Electro-absorption Modulated Laser according to an embodiment of the present invention
121 Silicon MUltipleXer (MUX)
122 Waveguides
123 Distributed Feed-Back (DFB) lasers
124 EAM sections
125 SOA section
130 Coherent dual polarization transmitter according to an embodiment of the present invention
131 Ring resonator filters and loop reflector
132 Laser active section
133 Power Splitter
134 Electro-Absorption Modulation (EAM) section
135 Power Combiner
136 Waveguides
137 Semiconductor Optical Amplifier (SOA) section
140 Ultra-broadband integrated source according to an embodiment of the present invention
141 Ring resonators filters and loop reflectors
142 Laser active sections
143 Wavelength MUltipleXer (MUX)
144 Waveguides

## Claims

1. A full wafer integration process for integrating III-V devices comprising:
- providing a planarized substrate wafer (10) comprising devices including patterned waveguide (2);
- providing an III-V wafer (20) comprising III-V active structures (22);
- MESA etching the III-V wafer (20) to form at least a MESA top (S104) and depositing a metal layer (4) on the MESA top; and in parallel
- etching the substrate wafer (10) to form at least a trench (S102), and covering the trench formed with a metal layer (4),
the trench of the substrate wafer (10) and the MESA top of the III-V wafer (20) being adapted to fit together, then
- fitting the photonic substrate wafer (10) and the III-V wafer (20) together and bonding both wafers by melting the metal layer (4) of the trenches and the metal layer (4) of the MESA top together (S106).

2. The full wafer integration process of claim 1 wherein the metal used for the metal layers 4 has a melting temperature lower than the temperature at which the physical properties of the III-V structures 22 or of the structures of the substrate wafer, such as the waveguide 2, begin to deteriorate.

3. The full wafer integration process of claim 1 or 2 further comprising:
- removing the substrate of the III-V wafer (20) (S108); and
- finalizing the electrical contact of the integrated III-V device by depositing a metal layer (4) onto the uncover III-V active structures (S110).

4. The full wafer integration process according to one of the previous claims comprising a second III-V structure (32) bonding with a second III-V wafer (30) after removing the substrate of the first III-V wafer (20) (S108).

5. A Photonic Integrated Circuit - PIC - manufactured according to one of the processes claimed in claims 1 to 4.

6. A photonic hybrid laser manufactured according to one of the processes claimed in claims 1 to 4, and comprising :
- two ring resonator filters and loop reflectors (101), linked to
- a laser active section (102), linked to
- a Semiconductor Optical Amplifier - SOA - section (103),
the ring resonator filters, the loop reflectors (101) and the waveguides (104) which linked each element together being previously etched on a photonic substrate wafer, and the laser (102) and SOA (105) sections being previously formed into III-V structures on at least one III-V wafer.

7. An Electro-absorption Modulated Laser - EML - (100) manufactured according to one of the processes claimed in claims 1 to 4, and comprising:
- two ring resonator filters and loop reflectors (101), linked to
- a laser active section (102), linked to
- an Electro-Absorption Modulation - EAM - section (105), linked to
- a Semiconductor Optical Amplifier - SOA - section (103),
the ring resonator filters, the loop reflectors (101) and the waveguides (104) which linked each element together being previously etched on a photonic substrate wafer, and the laser (101), the EAM (105) and the SOA (103) sections being previously formed into III-V structures on at least one III-V wafer.

8. A Wavelength Division Multiplexing - WDM - Electro-absorption Modulated Laser - EML - (120) manufactured according to one of the processes claimed in claims 1 to 4, and comprising:
- Distributed Feed-Back - DFB - Lasers (123), each one linked to an Electro-Absorption Modulation - EAM - section (124), and all laser signals entering into
- a wavelength MUltipleXer - MUX - (121), linked to
- a Semiconductor Optical Amplifier - SOA - section (125),
the MUX (121) and the waveguides (122) which linked each element together being previously etched on a photonic substrate wafer, and the DFB lasers (123), the EAM (124) and the SOA (125) sections being previously formed into III-V structures on at least one III-V wafer.

9. A coherent dual polarization transmitter (130) manufactured according to one of the processes claimed in claims 1 to 4, and comprising:
- two ring resonator filters and loop reflectors (131), linked to
- a laser active section (132) whose optical output signal is divided into two similar optical signals called Continuous Wawe - CW - tunable lasers, each CW tunable laser being linked to
- a static power splitter (133) dividing the laser signal into four laser signals, each one linked to
- an Electro-Absorption Modulation - EAM - section (134), linked to
- a static power combiner (135) which recombined the four laser signals realising a Quadrature Amplitude Modulation, the output of the static power combiner (135) being linked to
- a Semiconductor Optical Amplifier - SOA - section (137),
the ring resonator filters, the loop reflectors (131), the power splitter (133), the power combiner (135), and the waveguides (136) which linked each element together being previously etched on one photonic substrate wafer, and the laser (132), the EAM (134) and the SOA (137) sections being previously formed into III-V structures on at least one III-V wafer, and each CW tunable laser operating in TE and one of the two polarization being rotated after the active components to obtain two polarizations.

10. An ultra-broadband integrated source (140) manufactured according to one of the processes claimed in claims 1 to 4, and comprising:
- ring resonator filters and loop reflectors (141), linked to
- different laser structures (142N) for different wavelength ranges and set in parallel, all laser signals entering into
- a wavelength MUltipleXer - MUX - (143),
the ring resonators filters and loop reflectors (141), the MUX (143) and the waveguides (144) which linked each element together being previously etched on a photonic substrate wafer, and the different laser structures (142N) for different wavelength ranges being previously formed into III-V structures on III-V wafers.
